Europäisches Patentamt

(19) European Patent Office

Office européen des brevets

(11) EP 0 517 437 B1

(12) EUROPEAN PATENT SPECIFICATION

(45) Date of publication and mention
of the grant of the patent:
26.03.1997 Bulletin 1997/13

(51) Int. Cl.$^6$: C01G 25/02

(21) Application number: 92304892.0

(22) Date of filing: 29.05.1992

(54) **Zirconium oxide powder and a method of making thereof**

Zirconiumoxydpulver und Verfahren zu seiner Herstellung

Poudre d'oxyde de zirconium et méthode pour la fabriquer

(84) Designated Contracting States:
DE FR GB

(30) Priority: 31.05.1991 JP 156057/91
18.07.1991 JP 202176/91
18.07.1991 JP 202177/91
20.08.1991 JP 231144/91

(43) Date of publication of application:
09.12.1992 Bulletin 1992/50

(73) Proprietor: TOSOH CORPORATION
Yamaguchi-ken 746 (JP)

(72) Inventors:
• Iwata, Eiichi
Shinnanyo-shi, Yamaguchi-ken (JP)
• Oomichi, Nobukatsu
Shinnanyo-shi, Yamaguchi-ken (JP)
• Oogai, Michiharu
Hikari-shi, Yamaguchi-ken (JP)
• Matsui, Koji
Shinnanyo-shi, Yamaguchi-ken (JP)
• Chikamori, Yuji
Shinnanyo-shi, Yamaguchi-ken (JP)

(74) Representative: Kearney, Kevin David Nicholas et al
KILBURN & STRODE
30 John Street
London, WC1N 2DD (GB)

(56) References cited:
EP-A- 0 194 556          EP-A- 0 337 472

• PATENT ABSTRACTS OF JAPAN vol. 8, no. 7 (C-204)(1444) 12 January 1984
• PATENT ABSTRACTS OF JAPAN vol. 9, no. 237 (C-305)(1960) 24 September 1985
• PATENT ABSTRACTS OF JAPAN vol. 11, no. 30 (C-400)(2477) 29 January 1987

## Description

This invention relates to a zirconium oxide powder and a method of making thereof. Normally, zirconium oxide powder is mixed with the other powders, and the mixture is molded and sintered, thereby producing various materials. For instance, it is utilized in a great amount in the production of solid oxide electrolyte, piezoelectric material, abrasion resistance material, abrasive material and the like. Zirconium oxide added with stabilizers such as yttria, magnesia, calcia, ceria and the like, is utilized in the production of structural materials composed of a stabilized zirconium oxide, or a partially stabilized zirconium oxide.

As a method of making zirconium oxide powder, a method is known wherein hydrous zirconia is formed by neutralizing or hydrolyzing an aqueous solution of zirconium salt, by dewatering the reaction solution whereby hydrous zirconia powder is obtained, and by calcining it. Among these, a method by hydrolysis reaction has widely been performed since it is expected that the particle size of the obtained hydrous zirconia powder becomes uniform and fine. Among methods classified in this hydrolysis method, ① a method of boiling and hydrolyzing a water-soluble zirconium salt aqueous solution (Inorg. Chem. 3,146 (1964)), ② a method of performing an ultrafiltration of a zirconium salt aqueous solution after it is hydrolyzed in heating thereof (U.S.P. 4,985,229), ③ a method of performing azeotropic distillation of a water-soluble zirconium salt aqueous solution after it is hydrolyzed and added with an organic solvent (The aerated bulk density of a normally obtained hydrous zirconia powder is to be 0.4 to 0.5 g/cm$^3$. By contrast, in this method, powder of about 0.9 g/cm$^3$ is obtained.) (Japanese Examined Patent Publication No. 39366/1984), ④ a method of performing hydrothermal treatment of a zirconium salt aqueous solution under pressure and at 120 to 300°C (U.S.P. 2,984,628), ⑤ a method wherein a water-soluble zirconium salt aqueous solution is added with hydrogen peroxide or a compound forming hydrogen peroxide, and heat-treated at 80 to 300°C (Japanese Examined Patent Publication No. 43286/1986), ⑥ a method wherein a zirconium salt aqueous solution is hydrolyzed and particles thereof ranging from 0.1 to 0.3 μm are separated by a sedimentation method or the like (Japanese Unexamined Patent Publication No. 217430/1983), ⑦ a method wherein a water-soluble zirconium salt aqueous solution is added with a chloride selected from aluminum, alkali metal and alkaline-earth metal, and hydrolyzed at 95°C or more (U.S.P. 4,873,064), and the like are known.

As problems in forming zirconium oxide powder, for instance, generation of defects such as lamination in pressing, retardation in casting rate in case of performing slip casting, clogging of a gypsum mold and the like are pointed out. These problems cause lowering of density and strength in a sintered body as well as lowering of productivity thereof. The deterioration of the moldability is particularly a problem in case of producing large-sized products or in case of industrially producing a large number of products by an automatic press. Considering in view of the powder property, when the particle size is too large, the sintering ability after molding is lowered, whereas when it is too small, the powder is provided with a large surface area, and the moldability thereof is worsened by aggregation of the powders. The moldability may vary with a distribution state of the particle size.

The following problems may be pointed out in zirconium oxide powder and a method of making thereof.

In case of industrially producing a large amount of zirconium oxide powder, in the calcining step thereof, a temperature distribution is liable to be caused in powder layers, which is especially significant when it is calcined in a vessel. By variation of the temperature in the powder layer, variation in specific surface area of the obtained zirconium oxide powder, is enhanced. The variation in the specific surface area of the powder gives rise to variation in shrinkage factor and strength of the sintered body whereby a highly reliable product is hard to be obtained. To narrow down the temperature distribution, conventionally, the powder is calcined for a long time, or the calcining temperature is elevated. However, naturally, the energy cost is increased.

When a zirconium oxide powder having a low bulk density is utilized, the density of the sintered body produced thereby is lowered and the strength thereof is lowered. Furthermore, in case of producing a partially stabilized zirconium oxide powder or a fully stabilized zirconium oxide powder, the stability factor of the obtained powder after the calcination is low or it is necessary to elevate the calcining temperature to obtain a high stability factor.

The conventional production methods of the above ① to ⑦ will be investigated as follows.

In the method of ①, a long time is required for the hydrolysis reaction, and it is difficult to obtain a high hydrous zirconia sol formation rate (the meaning, infra). This is because in the conventional methods including the method of ①, it is difficult to grow the hydrous zirconia yet to grow in the reaction solution having had a high hydrolysis rate by proceeding the hydrolysis reaction. This un-grown hydrous zirconia and non-reacted zirconium salt, cause a strong aggregation of zirconium oxide powder when the zirconium oxide powder is produced from an obtained hydrous zirconia suspension. Accordingly, the zirconium oxide powder obtained by this method has a deteriorated moldability.

In the method of ②, non-reacted substance and non-grown hydrous zirconia in the reaction solution are removed by the ultrafiltration, thereby obtaining hydrous zirconia having the particle size of 0.1 to 0.3 μm. However, this method is not economical, not suitable for mass production and not practical since the particle size of the hydrous zirconia powder is too small. The zirconium oxide powder obtained by calcination thereof is inferior with respect to the moldability.

In the method of ③, a method is disclosed wherein the conventional powder property is improved by adding an organic solvent to the solution after the hydrolysis reaction and by performing a heating distillation thereof. However, the purpose of the method is aimed to an improvement in a drying step after the hydrolysis reaction. The reaction solution obtained by the hydrolysis reaction, contains non-reacted substance and un-grown hydrous zirconium. The process is expensive since it uses the organic solvent, and there is a danger of fire in the drying step.

In the methods of ④ and ⑤, only hydrous zirconia sol having the particle size of 0.05 um or less is obtained. With such a small particle size, a strong tendency to aggregation occurs on calcining thereof, and the obtained zirconium oxide powder has inferior moldability.

The method of (6) is a method wherein particles having the particle size of 0.1 to 0.3 $\mu$m (micrometres) are separated by a sedimentation method or the like after the zirconium salt aqueous solution is hydrolyzed. In this method, it is difficult to sediment particles having particle size of submicron order even by centrifugal separation. The process is not practical since its production efficiency is low. Furthermore, since the particles are produced by the conventional hydrolysis method, even if the particles which have particle sizes of 0.1 to 0.3 $\mu$m (micrometres) are separated, the solution is a suspension still containing a large amount of un-reacted substance. When a suspension containing a large amount of the un-reacted substance is dried and calcined, as stated above, it is liable to aggregate and the zirconium oxide powder obtained is inferior with respect to its moldability.

In the method of (7), the particle size of the obtained hydrous zirconia can be as large as 0.1 to 0.3 $\mu$m (micrometres). Zirconia powder obtained by calcining powders having such a large particle size, is not suitable as raw material for producing a sintered body, since it is difficult to sinter at low temperature. Furthermore, it contains metallic compounds from the metal chloride added in large amounts in production thereof, and the removal thereof by cleaning or the like is difficult. Accordingly, industrialization of this process is difficult and is not practical since its production efficiency is low.

EP-A-0194556 discloses zirconia particles comprising secondary particles having particle sizes of 0.1 to 3 micrometres and primary particles having sizes of 500 Angstroms or less. It does not disclose BET surface area values or the particle size distribution found to make the powder of excellent moldability.

It does not disclose the process of the present invention which enables such powders of excellent moldability to be prepared.

As stated above, in producing zirconium oxide (zirconia) powder, methods which involve hydrolyzing water-soluble zirconium salts are not satisfactory although the particle size which is obtained can be expected to be uniform and fine.

The present invention provides a method of producing a zirconium oxide powder which overcomes shortcomings in the conventional technology, producing a zirconium oxide powder which has improved moldability and sintering ability as mentioned above, which comprises producing a hydrous zirconia suspension containing zirconia powder which has excellent moldability and sintering ability as well as containing only small amounts of un-reacted substance and un-grown hydrous zirconia, and which has high reactivity and an appropriate mean particle size, by a simple process, in a short reaction time, by drying the hydrous zirconia suspension utilizing a method in which a large amount of organic solvent is not necessary, and by calcining the hydrous zirconia powder obtained from the drying step. The term "ungrown hydrous zirconia" refers to hydrous zirconia which has not grown in particle size to a size where it is retained by an ultra-filtration membrane and whose growth is insufficient.

The inventors, after intensive study, discovered that a zirconium oxide powder which has a BET specific surface area of 1 to 10 $m^2$/g, a mean particle size of 0.3 to 1 $\mu$m (micrometres), and containing no more than 5 vol% or less of particles having a particle size of 0.1 $\mu$m (micrometres) or less and containing no more than 5 vol% of particles having a particle size of 10 $\mu$m (micrometres) or more has highly excellent moldability, and completed the invention based on this finding.

In this specification, "particle size" designates a diameter of a sphere having a volume the same with those of particles, and is measurable by a particle size distribution measuring instrument or the like. "Mean particle size" and "mean primary particle size" are respectively medians of the particle size and diameters of primary particles, that is, values wherein accumulated quantities of respective particles starting from the smallest ones, reach 50 vol%. The mean primary particle size is measurable by a particle size distribution measuring instrument by a photon correlation method.

A detailed explanation will be given to the present invention as follows.

In the zirconium oxide powder of the present invention, it is indispensable that the BET specific surface area is in the range 1 to 10 $m^2$/g, and the mean particle size is in the range 0.3 to 1 $\mu$m (micrometres). When the BET specific surface area is larger than the upper limit of the above range or the mean particle size is smaller than the lower limit of the above range, for instance, when a slip casting is to be used, it is difficult to utilize a highly concentrated slip since the viscosity of the slip is very high. Also when it is used in a gypsum mold, since it is a fine powder, it seals small pores in the gypsum, and therefore, the casting rate is low. In the case of performing a pressing process, since the particle size is too small, transmission of the forming pressure is less effective and lamination is liable to occur. In any event, it is difficult to produce a high-density sintered body.

On the other hand, when the BET specific surface area thereof is smaller than the lower limit of the above range or the mean particle size is larger than the upper limit of the above range, that is, when the particle size of the zirconium oxide powder is too large, it is difficult, as before, to obtain a high-density and high-strength sintered body from such particles having large particle size.

In cases when the BET specific surface area is larger than the upper limit of the above range and the mean particle size is within the above range, or in cases when the average particle size is larger than the upper limit of the above range and the BET specific surface area is within the above range, the zirconium oxide powder which is formed has a strong tendency for the particles to aggregate. Accordingly, small pores among particles are liable to remain as they are, even following forming and sintering of the particles, and as a result, a high-density sintered body is difficult to obtain.

Furthermore, in the zirconium oxide powder of this invention, it is indispensable that the powder contains no more than 5 vol % of particles having a particle size of 0.1 $\mu$m (micrometres) or less, and that the powder contains no more than 5 vol % of particles having a particle size of 10 $\mu$m (micrometres) or more. When the powder has particles which deviate from these ranges, good moldability can not be obtained since particles having too fine particle size or too coarse particle size are predominant, and as a result, a high-performance product is difficult to obtain. It is preferable that the particles should have particle sizes of 0.1 $\mu$m (micrometres) or less and that the powder should contain no more than 1 vol% of particles having a particle size exceeding 10 $\mu$m (micrometres), and it is even more preferable that the particles should have particle size of 0.1 $\mu$m (micrometres) or less and that the powder should contain no more than 1 vol% of particles having a particle size exceeding 5 $\mu$m (micrometres).

According to the present invention a method of making a zirconium oxide powder comprises forming hydrous zirconia by hydrolysing an aqueous solution of a zirconium salt, drying an obtained suspension of the hydrous zirconia, and calcining an obtained hydrous zirconia powder, characterised in that the aqueous solution of the zirconium salt is hydrolysed until the rate of hydrous zirconia sol formation reaches 90% or more, preferably 95% or more, the aqueous solution is heated to drive off water so that the volume of the reaction solution is lowered to 1/2 to 1/20 of the original volume and the concentrated solution is then spray dried so as to produce a hydrous zirconia powder having a crystallite size of 5 nm or less, of which the mean primary particle size is in the range 50 to 150 nm, calcining the said hydrous zirconia powder at a temperature in the range 600 to 1300°C and then grinding the powder, whereby the zirconium oxide powder is characterised in that the BET specific surface area thereof is in the range 1 to 10 m$^2$/g, the mean particle size thereof is in the range 0.3 to 1 $\mu$m (micrometres), the powder contains no more than 5 vol% of particles having a particle size of 0.1 $\mu$m (micrometres) or less, and contains no more than 5 vol% of particles having a particle size of more than 10 $\mu$m (micrometres).

When the mean primary particle size of a hydrous zirconia powder is smaller than the above range, the mean particle size of zirconium oxide powder obtained by calcination of such powder, is liable to be smaller than 0.3 $\mu$m (micrometres). On the other hand, when it is larger than the above range, the mean particle size of zirconium oxide powder obtained by calcination is liable to be larger than 1.0 $\mu$m (micrometres). Furthermore, when the crystallite size exceeds 5 nm, the mean particle size and the BET specific surface area of zirconia oxide obtained by the calcination are liable to increase.

The hydrolysis reaction is performed so that the forming rate (amount formed) of hydrous zirconia sol is 90% or more.

This is because forming of particles having particle sizes smaller than the above range, is further restrained, a hydrous zirconia powder having a narrower range of particle distribution is obtained, and in the zirconium oxide powder obtained by calcining the said hydrous zirconia powder, the content of particles having a particle size of smaller than 0.1 $\mu$m (micrometres) is a small proportion. In this specification, "hydrous zirconia sol forming rate" signifies the ratio of that portion of a hydrous zirconia sol formed by the hydrolysis reaction which is retained by an ultrafiltration membrane having a separation range (or nominal cut off molecular weight) of 300,000, as compared to that which is present in the raw material. The hydrous zirconia sol forming rate can be obtained by measuring the amount of Zr, by ICP (inductively coupled plasma) emission spectrochemical analysis, in a filtered solution, after the ultrafiltration. The ultrafiltration membrane utilized in this measurement, need not necessarily have a separation range of 300,000, and it is practically convenient to have a larger separation range. For instance, when a membrane having a separation range of 3,000,000 is utilized, compared with a membrane having the separation range of 300,000, substantially the same measured value is obtained as when a membrane having a separation range of 300,000 is used, but the result is obtained in a far short treating time. This hydrous zirconia sol forming rate corresponds to the hydrolysis rate minus the forming rate of un-grown hydrous zirconia. In this way, it is possible to measure quantities of non-reacted substance and un-grown hydrous zirconia in the reaction solution, which is not possible in a chelatometric filtration analysis such as is conventionally performed.

The zirconium salt which can be used is not restricted so long as it is water-soluble. For instance, zirconium chloride, zirconia nitrate, zirconium sulfate, zirconium oxychloride or the like can be used, or a mixture of zirconium hydroxide and an acid can be used. When zirconium hydroxide is utilized, various production methods can be used. For instance, zirconium hydroxide can be obtained by neutralizing a water-soluble zirconium salt aqueous solution with an alkali.

The concentration of zirconium salt in the aqueous solution is preferably not greater than 2 mol per l with respect to Zr. When the concentration is high, a long time is required for the hydrolysis reaction, or may make the hydrolysis reaction difficult. When it is low, it is naturally not economical. It is more preferable for the Zr concentration to be 0.05 to 1 mol/litre.

When the zirconium oxide powder which is to be used for producing a sintered body is to be made of a partially stabilized zirconium oxide, a fully stabilized zirconium oxide, or a zirconium oxide species composite oxide, it is preferable to add a stabilizer or the substance necessary for producing the composite oxide, to the aqueous solution of the zirconium salt. It can be added thereto after the hydrolysis reaction, or after drying or after calcining. It is preferably added to the aqueous solution of the zirconium salt as a raw material, hydroxide or hydrous oxide of a metal having a valency of two or more such as calcium, magnesium, yttrium, or cerium or a mixture of these.

When the forming rate by hydrolysis of the hydrous zirconium sol is below 90%, a hydrous zirconia suspension containing a large amount of un-grown hydrated substance is produced. The mean primary particle size of the hydrous zirconia powder obtained by drying such a suspension, is liable to be smaller than 50 nm. When the solution concentration is low, the mean primary particle size is liable to be 50 nm or more, and a hydrous zirconia is produced of which the crystallite size is larger than 5 nm. Thus when the solution concentration is low, an amorphous composite body combined with negative ions in the solution is liable to be produced. In such an amorphous composite body, since the degree of aggregation thereof in the calcination is significant, the particle size of the zirconium oxide becomes large, and the negative ions are dissociated and corrode the filter medium.

In order to ensure that the forming rate of the hydrous zirconia sol is 90% or more, the following methods (1) and/or (2) can be used.

(1) Hydrous zirconia is added to a zirconium salt aqueous solution in an amount of 0.05% or more in terms of zirconium oxide with respect to the zirconium salt, the negative ion concentration is arranged to be in the range 0.5 g.ion/litre to 1 g.ion/litre, and the hydrolysis reaction is performed at 60 to 150$^{\circ}$C.
(2) The hydrolysis reaction is performed by boiling a zirconium salt aqueous solution under refluxing thereof, and the reaction continues while condensing it under atmospheric pressure.

A detailed explanation will be given of each of these.

In the method (1), first, hydrous zirconia is added to the aqueous solution of the zirconium salt. The amount added is to be 0.05 or more of hydrous zirconia (in terms of zirconium oxide) with respect to a raw material zirconium salt charging quantity (in terms of zirconium oxide). When the amount added is too small, it becomes substantially difficult to achieve a hydrous zirconia sol forming rate of 90% or more. The hydrous zirconia which is added is not restricted, so long as it is insoluble in the aqueous solution of the zirconium salt. For instance, a hydrous zirconia suspension obtained by hydrolysis of only a zirconium salt aqueous solution, or a hydrous zirconia suspension obtained by hydrolysis of an aqueous solution wherein an acid or an alkali has been added to the aqueous solution of the zirconium salt aqueous solution, or a hydrous zirconia obtained by drying such suspensions, or a hydrous zirconia obtained by washing such suspensions with distilled water and drying, or a hydrous zirconia obtained by neutralizing such suspensions with an alkali, followed by washing with water and drying thereof, and the like can be used. To further shorten the time, wherein the hydrous zirconia sol forming rate becomes 90% or more, a hydrous zirconia having a crystallite size of 15 nm or less is desirable.

At the same time as the addition of the hydrous zirconia, the negative ion concentration of the raw material solution is controlled. The negative ion concentration of the aqueous solution is arranged to be in the range 0.5 g.ion/litre or more, and less than 1 g.ion/litre. When the negative ion concentration becomes 1 g.ion/litre or more, the time required for the hydrous zirconia sol forming rate to become 90% is increased, whereas when the negative ion concentration is smaller than 0.5 g.ion/litre, the productivity is lowered. This negative ion concentration is preferably in the range 0.5 to 0.9 g.ion/litre, and more preferably in the range 0.5 to 0.85 g.ion/litre.

However, the concentration of the zirconium salt aqueous solution need not be restricted even though the negative ion concentration is arranged to be in the range 0.5 g.ion/litre or more to lower than 1 g.ion/litre. For instance, when the negative ion concentration of an aqueous solution containing hydrous zirconia and zirconium salt is liable to become 1 g.ion/litre or more, the zirconium salt aqueous solution may be previously contacted with an ion exchange resin, thereby removing a portion of the negative ion so as to bring the negative ion concentration back within the desired range and thereafter, the hydrous zirconia is added, thereby controlling the solution. When the zirconium salt is for instance, a zirconyl salt, the concentration of the zirconyl ion is preferably in the range 0.05 to 2.0 g.ion/litre, and more preferably 0.2 to 1.5 g.ion/litre. Because, when the zirconyl ion concentration is smaller than 0.5 g.ion/litre, the production thereof is decreased, and when it is larger than 2.0 g.ion/litre, the viscosity of the solution is increased.

The obtained mixture of the hydrous zirconia and the aqueous solution of the zirconium salt is hydrolyzed. The temperature of the hydrolysis, is preferably 60 to 150$^{\circ}$C, more preferably 80$^{\circ}$C or more up to the boiling temperature or less. When the reaction temperature is elevated to more than 150$^{\circ}$C, the mean particle size of the hydrous zirconia powder obtained by drying thereof, becomes small, the hydrous zirconia powder having a mean particle size of 50 nm or more which is the target, cannot be produced, and is not practical since more pressure is required, which makes industrial mass production difficult. When the reaction temperature is lower than 60$^{\circ}$C, it is substantially difficult to achieve a hydrous zirconia forming rate of 90% or more. The reaction time required for achieving a hydrous zirconia sol forming rate of 90%, is shortened by increasing the added quantity of hydrous zirconia. The reaction time is preferably about 1 to 100 hours.

In this method, after drying the hydrous zirconia suspension which is obtained, the zirconia powder is produced by calcining the dried suspension. When the zirconium oxide powder is to contain a stabilizer, the stabilizer for instance, a compound of Y, Ca, Mg, Ce or the like may be added to the suspension of the hydrous zirconia powder and dried with it. Alternatively the stabilizer may be added at any of the steps on the way to obtaining the hydrous zirconia powder.

In the method of (2), first, the zirconium salt aqueous solution is boiled under reflux and hydrolyzed. It is preferable to perform the hydrolysis under reflux, so that the hydrous zirconia forming rate is in the range 30 to 90%. Particularly, it is preferable to perform the hydrolysis until the rate reaches 70% or more, and more preferably 80% or more. The lower the hydrous zirconia forming rate at this step, the more difficult it becomes to achieve a hydrous zirconia forming rate of 90% or more in the successive condensation.

After the hydrolysis under reflux is performed, the hydrolysis reaction continues while the solution is being condensed under atmospheric pressure.

Considering the hydrous zirconia sol forming rate and the productivity thereof, this concentration process is preferably performed until the volume of the reaction solution becomes 1/2 to 1/20 of the original volume, and more preferably 1/5 to 1/10 of the original volume. The concentration of the hydrous zirconia sol in the hydrous zirconia suspension after the concentration, is preferably to be in the range of about 10 to 2000 g/litre, particularly 100 to 1000 g/litre in terms of $ZrO_2$. However, the concentration varies with the drying conditions and the like. When the condensation in the condensation step is insufficient, it is difficult to promote the hydrous zirconia sol forming rate, which causes a lowering of the productivity in the succeeding steps.

When a hydrous zirconia suspension having a hydrous zirconia sol forming rate of 90% or more which is obtained by the above steps, is dried by a conventional method, hydrous zirconia powder having a crystallite size of 5 nm or less and a mean primary particle size of 50 to 150 nm is obtained. Spray drying is a preferred drying method. When drying methods other than spray drying are used, for instance, oven drying, the dried powder thus obtained becomes block-like, and it is difficult to uniformly calcine the powder, unless grinding is carried out after the drying to make it uniform, with the attendant considerable energy losses.

As explained below, the aerated bulk density of the hydrous zirconia is preferably in the range 1.0 to 2.0 g/cm³. An aerated bulk density of this range can be obtained by spray drying. The aerated bulk density is more preferably in the range 1.2 to 1.8 g/cm³, and particularly preferably in the range 1.3 to 1.5 g/cm³. When the aerated bulk density of the hydrous zirconia is lower than 1.0 g/cm³, the aerated bulk density of the zirconium oxide powder obtained by sintering the dried powder becomes small. Accordingly, when molding is performed using such a zirconium oxide powder, a large mold is necessary, and the forming pressure has to be increased. Furthermore, when the shrinkage factor is large in sintering, the density and the strength of the sintered body are lowered. On the other hand, when the aerated bulk density of the hydrous zirconia is greater than 2.0 g/cm³, the density of the zirconium oxide powder obtained after the calcination step becomes high. However, the particle size thereof also becomes larger, and in formed bodies obtained therefrom, the gaps between particles are liable to be larger, and it becomes difficult to obtain a sintered body having a high density. A sintered body having the high density can only be obtained in such a case by grinding the calcined powder before molding and this requires a large amount of energy.

The spray drying has the further advantage that the hydrous zirconia powder particles do tend to be spherical in shape. When the shape of the powder is a sphere, the heat conduction in the calcination step becomes more uniform, the properties of the powder after the calcination is of a small variation.

Conventional temperatures for the spray drying may be utilized. Preferably temperatures of 50 to 250°C, and more preferably 100 to 200°C are used.

To control the surface properties of the obtained hydrous zirconia powder, an organic compound, a surface treating agent or the like may be added to the hydrous zirconia suspension. As the organic compound, an alcohol species, an ester species, or a surfactant can preferably be used. It is particularly preferable to utilize an alcohol species containing 1 to 10 carbon atoms. The amount of the organic compound which is added is preferably in the range 0.01 to 10 mol% with respect to Zr in the hydrous zirconia suspension, and more preferably 0.01 to 1 mol%.

In order to facilitate the drying step, control of the viscosity of the hydrous zirconia suspension may be performed before the drying is carried out. The viscosity control is preferably performed so that the viscosity of the hydrous zirconia suspension becomes about 50 to 5000 cP (centipoise). This viscosity can be controlled by controlling the pH by addition of an acid or by an alkali, or by adding a flocculant, a surfactant, an organic high molecular weight compound or the like.

The drying may be performed so that the entrained moisture content of the hydrous zirconia powder is in the range of about 10 to 15 wt% as in the conventional method.

The hydrous zirconia powder obtained as above, is subsequently calcined.

The calcination may be performed by conventional methods in an oxygen atmosphere under atmospheric pressure. The calcining temperature is preferably in the range 600 to 1300°C, and the holding time at the calcining temperature is preferably about one hour or more.

The inventors have discovered that when hydrous zirconia powder containing an added stabilizer is calcined so that a partially stabilized zirconium oxide powder or a fully stabilized zirconium oxide powder is formed, it is necessary, in order to ensure that the miscibility reaction occurs completely, to reduce the rate at which the temperature is elevated from the drying temperature at which one obtains the hydrous zirconia powder to the temperature at which the miscibility reaction is initiated. The rate at which the temperature is elevated in this temperature range is preferably 1.0°C/min. or less, more preferably 0.5°C/min. or less. The mixing reaction is confirmed for instance, by observing the X-ray diffraction pattern of the powder, Raman spectra thereof or the like, wherein a peak of a tetragonal system is confirmed. The temperature of initiation of the miscibility reaction depends on the quantity and kind of the stabilizer, and is generally in the range 300 to 900°C. Accordingly, the calcination of the powder may be performed at a temperature elevating rate of 1.0°C/min. or less continuously up to the calcining temperature. In a modified procedure, the temperature elevation may be performed at a rate of about 5°C/min. up to the drying temperature, then at a rate of 1.0°C/min. or less until the temperature of the initiation of the miscibility reaction, and then by 2.0°C/min. or less after the initiation of the miscibility reaction up to the calcining temperature. This procedure enables the calcination to be performed with high productivity.

An intended zirconium oxide powder can be obtained, by cleaning the formed zirconium oxide powder in accordance with the necessity (for instance, to remove impurities such as alkali metals), and by grinding it. The zirconium oxide before the grinding which has been obtained by calcining hydrous zirconia powder formed by spray drying, has appropriate aggregated particle size and strength, and water can easily pass through. Accordingly, loss of particles in cleaning is minimized, and cleaning can easily be performed.

Although it is not yet entirely understood why the moldability of the zirconium oxide powder of this invention when the BET specific surface area is in the range 1 to 10 $m^2$/g, the mean particle size, 0.3 to 1 $\mu$m (micrometres), and the powder contains no more than 5 wt% of particles of which particle size is 0.1 $\mu$m (micrometres) or less or particles of which the particle size exceeds 10 $\mu$m (micrometres) is excellent, the following is presumed to be the explanation.

Among the cases wherein the BET specific surface area and the mean particle size of the zirconium oxide powder are outside the ranges of this invention, that is, 1 to 10 $m^2$/g and 0.3 to 1 $\mu$m, respectively, when the BET specific surface area is larger than the above range or the mean particle size is smaller than the above range, when it is wished to perform slip casting, it is difficult to dry a slip having a high concentration since the viscosity of the slip is increased. Or when a slip is charged into a gypsum mold, the casting rate is slow since the powder is a fine powder and seals small pores in the gypsum. Or in pressing, the transmission of the forming pressure is less good or lamination is liable to be generated since the particle size is too small. In any case, a product having a high density is difficult to obtain. On the other hand, when the BET specific surface area is smaller than the above range or the mean particle size is larger than the above range, which means that particles of the zirconium oxide powder are large in size, and coarse, it is difficult to obtain a sintered body having high density and high strength. Furthermore, when the BET specific surface area is larger than the above range and the mean particle size is in the above range, or when the mean particle size is larger than the above range and the BET specific surface area is in the above range, it means that the zirconium oxide powder is composed of a strong aggregation of fine particles, and the small pores among the fine particles are liable to remain unchanged, even after molding and sintering. As a result, a sintered body having a high density is difficult to obtain. Furthermore, in this invention, it is indispensable that the powder contains no more than 5 vol% of both particles having a particle size of 0.1 $\mu$m (micrometres) or less and of particles having particle size exceeding 10 $\mu$m (micrometres). When the particles are outside these ranges, good moldability cannot be obtained since too fine or too coarse particles are predominant. As a result, it is difficult to obtain a product having high performance.

As stated above, the zirconium oxide powder of this invention wherein the BET specific surface area is 1 to 10 $m^2$/g, the mean particle size, 0.3 to 1 $\mu$m (micrometres), and which contains no more than 5% of particles having particle sizes of 0.1 $\mu$m (micrometres) or less and of particle sizes exceeding 10 $\mu$m (micrometres) shows the preferable moldability, it is believed because the particles are of pertinent sizes and pertinent distributions.

The powder of this invention is of excellent moldability compared to conventional ones. Ceramics obtained by molding and by sintering the powder have high density and high strength compared to conventional ceramics, and can be used as an industrial raw material having high performance.

Further, according to the method of this invention, it is possible to easily produce the above powder.

EXAMPLES

EXAMPLE 1

A hydrous zirconia suspension was obtained by boiling a zirconium oxychloride aqueous solution having a concentration of 50 g/$\ell$ in terms of $ZrO_2$ containing $YC\ell_3$ of 3 mol% in terms of $Y_2O_3$ (A value with respect to a total of $YC\ell_3$, mentioned later, in terms of $Y_2O_3$ and zirconium oxychloride, mentioned later, in terms of $ZrO_2$. The same definition applies infra.), for 65 hours under reflux, and by condensing it under atmospheric pressure for 25 hours until the concentration in terms of $ZrO_2$ reached 300 g/$\ell$. A portion of the suspension was sampled and dried by setting it aside as it was. The mean primary particle size of the obtained hydrous zirconia powder was measured by a particle size distribution measuring instrument by the photon correlation method and found to be 100 nm. The crystallite size thereof was measured by the powder X-ray diffraction method and found to be 4 nm. (Hereinafter, the hydrous zirconia suspension was dried by the same method, and the mean primary particle size and the crystallite size were measured by the same means.)

The forming rate of the hydrous zirconia sol was measured by the ultra filtration membrane having a separation range of 300,000 (hereinafter, by the same method), and found to be 92%.

The solution was spray-dried under the condition of feeding wind of 180°C and exhaust wind of 85°C, by a spray dryer. (The same for the following Examples.) The obtained dried particles had a sphere-like shape, and the aerated bulk density thereof was 1.25 g/cm$^3$.

After the dried powders were heated at various temperatures, and Raman spectrum thereof was measured. As a result, a peak of the tetragonal system was confirmed at 500°C.

The temperature of the dried powder was elevated at a temperature elevating rate of 1°C/min. up to 500°C, and 1.5°C/min. thereafter up to 1050°C, and maintained at 1050°C for 2 hours, by which a zirconium oxide powder having the tetragonal system was obtained.

After the obtained powder was ground, both slip casting and the pressing were performed, wherein a good moldability thereof was shown.

EXAMPLE 2

This Example was performed under the same conditions as in Example 1 except for the calcining conditions. The temperature elevating rate was 1°C/min. until 500°C, and 1.5°C/min. thereafter until 950°C. The calcining temperature was 950°C, and the holding time at the temperature was 2 hours.

EXAMPLE 3

This Example was performed under the same conditions as in Example 1 except for the calcining conditions. The temperature elevating rate was 1°C/min. until 500°C, and 1.5°C/min. thereafter until 1250°C. The calcining temperature was 1250°C, and the holding time at the temperature was 2 hours.

COMPARATIVE EXAMPLE 1

A zirconium oxychloride aqueous solution having a concentration of 25 g/$\ell$ in terms of $ZrO_2$ containing $YC\ell_3$ having concentration of 3 mol% in terms of $Y_2O_3$, was boiled for 40 hours and hydrolyzed. Thereafter, the solution was condensed by decompression under a normal temperature until the concentration thereof in terms of $ZrO_2$ reached 300 g/$\ell$, by which a hydrous zirconia powder suspension was obtained. The mean primary particle size of the dried powder was 140 nm, and the crystallite size thereof was 6 nm. The hydrated bulk density was 0.85 g/cm$^3$, and the particle had a sphere-like shape. The forming rate of the hydrous zirconia sol was 60%.

The suspension was dried, and calcined under the same conditions as in Example 1, by which a zirconium oxide powder was obtained. When slip casting was performed by utilizing this powder, the gypsum mold was clogged and a good formed body could not be obtained.

COMPARATIVE EXAMPLE 2

A zirconium oxychloride aqueous solution having a concentration of 100 g/$\ell$ in terms of $ZrO_2$ was boiled for 90 hours and hydrolyzed. The solution was condensed under the same condition as in Comparative Example 1, by which a suspension of hydrous zirconia powder was obtained. The dried powder was amorphous and the mean primary particle size thereof was 10 nm. The aerated bulk density was 0.91 g/cm$^3$, and the particle had a sphere-like shape. The forming rate of the hydrous zirconia sol was 60%.

The suspension was dried, and calcined under the same condition as in Example 1, by which a zirconium oxide powder was obtained.

Table 1 shows the powder properties of the powders obtained in the above Examples and Comparative Examples.

Furthermore, sintered bodies were obtained by forming the zirconium oxide powders obtained in the Examples and the Comparative Examples in 57 mm x 34 mm x about 5 mm under pressure of 700 kgf/cm$^2$, and by sintering them at 1500°C for 2 hours. The densities of the sintered body were measured by Archimedes method. Test pieces of 3 mm x 4 mm x about 40 mm were cut out from the obtained sintered bodies, and the three point bending strengths at a normal temperature thereof were measured by the method prescribed in JIS R 1601. These measured values were shown in Table 2. The values of the three point bending strengths at normal temperature in the Table, were mean values of those of thirty samples.

8

Table 1

| Powder Property | | | | | |
|---|---|---|---|---|---|
| | Mean particle size ($\mu$m) | BET specific surface area (m$^2$/g) | Particle size distribution (%) | | |
| | | | $\leqq$0.1 $\mu$m | >10 $\mu$m | >5 $\mu$m |
| Example 1 | 0.8 | 6.2 | 0.6 | 0 | 0.6 |
| Example 2 | 0.5 | 9.3 | 0.9 | 0 | 1.0 |
| Example 3 | 0.7 | 5.6 | 0.4 | 0.5 | 0.9 |
| Comparative Example 1 | 0.8 | 15.2 | 6.5 | 0 | 0.5 |
| Comparative Example 2 | 1.5 | 7.7 | 1.2 | 3.2 | 8.1 |

Table 2

| Density and three point bending strength at normal temperature of sintered body | | |
|---|---|---|
| | Density of sintered body (g/cm$^3$) | Three point bending strength at normal temperature of sintered body (kgf/mm$^2$) |
| Example 1 | 6.09 | 125.7 |
| Example 2 | 6.05 | 120.1 |
| Example 3 | 6.07 | 122.3 |
| Comparative Example 1 | 6.05 | 115.8 |
| Comparative Example 2 | 5.89 | 99.5 |

EXAMPLE 4

The temperature of the dried powder of the hydrous zirconia obtained in Example 1 was elevated at a temperature elevating rate of 0.5°C/min. up to 500°C, at 2.0°C/min., up to 600°C, and held at 600°C for 2 hours, by which a zirconium oxide powder was obtained.

A stabilization ratio (%) was calculated by the equation shown by Garvie and Nicholson as follows. (The same as in Examples 5 through 7)

$$\text{Stabilization rate (\%)} = \text{It}/(\text{It}+\text{Im1}+\text{Im2}) \times 100(\%)$$

where It is an integral strength of the tetragonal system (111) in X-ray diffraction, Im1, an integral strength of the cubic system (111) in X-ray diffraction, and Im2, an integral strength of the monoclinic system (111) in X-ray diffraction.

The stabilization rate of the obtained powder (%) was 82%.

Even when the obtained powder was ground until the mean particle size became about 1 $\mu$m (micrometres), the lowering of the stabilization rate was small.

EXAMPLE 5

The temperature of the dried powder of hydrous zirconia obtained in Example 1 was elevated at a temperature elevating rate of 0.5°C/min. up to 500°C, at 2.0°C/min. thereafter up to 700°C, and was held at 700°C for 2 hours by which a zirconium oxide powder was obtained.

The stabilization rate of the obtained powder (%) was 88%.

Even when the obtained powder was ground until the mean particle size becomes about 1 $\mu$m (micrometres), the stabilization rate was only a little lowered.

EXAMPLE 6

The temperature of the dried powder of the hydrous zirconia obtained in Example 1 was elevated at the temperature elevating rate of 0.5°C/min. up to 700°C, and held at 700°C for 2 hours, by which a zirconium oxide powder was obtained.

The stabilization rate of the obtained powder (%) was 92%.

Even when the obtained powder was ground until the mean particle size becomes about 1 $\mu$m (micrometres), the stabilization rate was only a little lowered.

EXAMPLE 7

The temperature of the dried powder of hydrous zirconia obtained in Example 1, was elevated at a temperature elevating rate of 5.0°C/min. up to 600°C, and held at 600°C for 2 hours, by which a zirconium oxide powder was obtained.

The stabilization rate thereof (%) was 74%.

When the obtained powder was ground until the mean particle size became about 1 $\mu$m (micrometres), the stabilization ratio was considerably lowered.

EXAMPLE 8

The temperature of the dried powder of the hydrous zirconia obtained in Example 1, was elevated at the temperature elevating rate of 5.0°C up to 700°C, and held for 2 hours at 700°C, by which a zirconium oxide powder was obtained.

The stabilization rate thereof (%) was 83%.

When the obtained powder was ground until the mean particle size became about 1 $\mu$m, the stabilization rate was considerably lowered.

EXAMPLE 9

While a zirconium oxychloride aqueous solution having a concentration of 0.4 mol/$\ell$ in terms of $ZrO_2$ was being stirred, hydrolysis reaction was performed at the boiling temperature for 160 hours. The obtained hydrous zirconia suspension of 100 m$\ell$ was added to 2 $\ell$ of a zirconium oxychloride aqueous solution having concentration of 200 g/$\ell$ in terms of $ZrO_2$, and a zirconium oxychloride aqueous solution of 100 $\ell$ having concentration of 500 g/$\ell$ was obtained by adding distilled water. A hydrous zirconia suspension was obtained by performing hydrolysis reaction at the boiling temperature for 65 hours, while stirring the raw material solution.

The mean primary particle size of the hydrous zirconia powder was 90 nm, and the crystallite size thereof was 3 nm. The aerated bulk density was 1.12 g/cm$^3$. The forming rate of the hydrous zirconia sol was 92%.

49 g of yttrium chloride was added to the hydrous zirconia suspension and the mixture dried, calcined, molded, and sintered under the same conditions as in Example 1.

EXAMPLE 10

The hydrous zirconia suspension of 1 $\ell$ utilized in Example 7, was added to a zirconium oxychloride aqueous solution of 1.8 $\ell$ having a concentration of 200 g/$\ell$ in terms of $ZrO_2$, and a zirconium oxychloride aqueous solution of 10 $\ell$ having a concentration of 45 g/$\ell$ was obtained by adding distilled water. A hydrous zirconia suspension was obtained by performing hydrolysis reaction at the boiling temperature for 40 hours while stirring the raw material solution.

The mean primary particle size of the hydrous zirconia powders was 80 nm, and the crystallite size was 3 nm. The aerated bulk density was 1.18 g/cm$^3$. The forming rate of the hydrous zirconia sol was 94%.

49 g of yttrium chloride was added to the hydrous zirconia suspension and the mixture dried, calcined, molded, and sintered under the same condition as in Example 1.

EXAMPLE 11

The hydrous zirconia suspension utilized in Example 7 was neutralized with aqueous ammonia, rinsed with distilled water and dried. The dried powder of the obtained hydrous zirconia was added to a zirconium oxychloride aqueous solution of 200 m$\ell$ having a concentration of 200 g/$\ell$ in terms of $ZrO_2$ so that it became 4.9 g in terms of $ZrO_2$, and by adding distilled water a solution of 1 $\ell$ of zirconium oxychloride having concentration of 50 g/$\ell$ in terms of $ZrO_2$ and

hydrous zirconium of 10% in terms of $ZrO_2$ with respect to the zirconium oxychloride, was obtained. A hydrous zirconia suspension was obtained by performing hydrolysis reaction at the boiling temperature for 40 hours while stirring the raw material solution.

The mean primary particle size of the hydrous zirconia powder was 80 nm and the crystallite size was 3 nm. The aerated bulk density was 1.23 $g/cm^3$. The forming rate of the hydrous zirconia sol was 94%.

49 g of yttrium chloride was added to the hydrous zirconia suspension and the mixture dried, calcined, molded and sintered under the same conditions as in Example 1.

EXAMPLE 12

The hydrous zirconia particle suspension utilized in Example 7, was condensed and dried. The dried powder of the hydrous zirconia was added to 200 m$\ell$ of a zirconium oxychloride aqueous solution having a concentration of 200 $g/\ell$ in terms of $ZrO_2$ so that it became 0.49 g in terms of $ZrO_2$. By adding distilled water to the solution, a solution of 1 $\ell$ of zirconium oxychloride having a concentration of 50 $g/\ell$ in terms of $ZrO_2$ (0.804 mol/$\ell$ in chlorine ion concentration) and hydrous zirconia having a concentration of 1% in terms of $ZrO_2$ with respect to the zirconium oxychloride, was formed. A hydrous zirconia suspension was obtained by performing hydrolysis reaction at the boiling temperature for 40 hours, while stirring the raw material solution.

The mean primary particle size of the hydrous zirconia powder was 90 nm, and the crystallite size was 3 nm. The aerated bulk density was 1.23 $g/cm^3$. The forming ratio of the hydrous zirconia sol was 92%.

49 g of yttrium chloride was added to the hydrous zirconia suspension and the mixture dried, calcined, molded and sintered under the same condition as in Example 1.

EXAMPLE 13

This Example was carried out under the same conditions as in Example 7, except that 28 g of yttrium oxide was added and hydrolysis reaction was performed.

The mean primary particle size of the hydrous zirconia powder was 100 nm, and the crystallite size was 3 nm. The aerated bulk density was 1.17 $g/cm^3$. The forming rate of the hydrous zirconia sol was 92%.

EXAMPLE 14

This Example was carried out under the same conditions as in Example 8, except that 28 g of yttrium oxide was added and hydrolysis reaction was performed.

The mean primary particle size of the hydrous zirconia powder was 90 nm, and the crystallite size was 3 nm. The aerated bulk density was 1.29 $g/cm^3$. The forming rate of the hydrous zirconia sol was 94%.

COMPARATIVE EXAMPLE 3

A hydrous zirconia suspension was obtained by performing hydrolysis reaction at the boiling temperature for 100 hours while stirring a zirconium oxychloride agueous solution of 10 $\ell$ having a concentration of 0.4 mol/$\ell$.

The mean primary particle size of the hydrous zirconia powder was 30 nm, and the crystallite size was 2 nm. The aerated bulk density was 0.87 $g/cm^3$. The forming rate of the hydrous zirconia sol was 60%.

49 g of yttrium chloride was added to the hydrous zirconia suspension which was dried, calcined, molded and sintered under the same condition as in Example 1.

COMPARATIVE EXAMPLE 4

A hydrous zirconia suspension was obtained by performing hydrolysis reaction at the boiling temperature for 80 hours, while stirring a zirconium oxychloride agueous solution having the concentration of 0.2 mol/$\ell$.

The mean primary particle size of the hydrous zirconia powder was 160 nm, and the crystallite size was 6 nm. The aerated bulk density was 0.91 $g/cm^3$. The forming rate of the hydrous zirconia sol was 80%.

49 g of yttrium chloride was added to the hydrous zirconia suspension, which was dried, calcined, molded and sintered under the same conditions as in Example 1.

Table 3 shows the powder properties of the zirconium oxide powders obtained in Examples 9 to 14 and Comparative Examples 3 and 4, and Table 4 shows the densities and the three point bending strengths under normal temperature obtained by the same method as in Example 1.

Table 3

| Powder Property | | | | | |
|---|---|---|---|---|---|
| | Mean particle size ($\mu$m) | BET specific surface area (m$^2$/g) | Particle size distribution (%) | | |
| | | | $\leqq$0.1 $\mu$m | >10 $\mu$m | >5 $\mu$m |
| Example 9 | 0.8 | 6.5 | 0.5 | 0 | 0.4 |
| Example 10 | 0.7 | 6.2 | 0.7 | 0 | 0.8 |
| Example 11 | 0.7 | 7.6 | 0.3 | 0 | 0.6 |
| Example 12 | 0.8 | 9.2 | 1.8 | 0.5 | 1.6 |
| Example 13 | 0.6 | 8.3 | 0.1 | 0.2 | 1.2 |
| Example 14 | 0.9 | 5.6 | 0.2 | 0 | 0.9 |
| Comparative Example 3 | 1.2 | 4.7 | 0.1 | 1.0 | 1.9 |
| Comparative Example 4 | 0.8 | 10.2 | 3.2 | 0 | 0.1 |

Table 4

| Density and three point bending strength at normal temperature of sintered body | | |
|---|---|---|
| | Density of sintered body (g/cm$^3$) | Three point bending strength at normal temperature of sintered body (kgf/mm$^2$) |
| Example 9 | 6.06 | 121.5 |
| Example 10 | 6.05 | 120.1 |
| Example 11 | 6.06 | 122.3 |
| Example 12 | 6.02 | 115.7 |
| Example 13 | 6.03 | 119.0 |
| Example 14 | 6.07 | 123.3 |
| Comparative Example 3 | 5.76 | 90.3 |
| Comparative Example 4 | 5.88 | 106.0 |

**Claims**

1. A method of making a zirconium oxide powder which comprises forming hydrous zirconia by hydrolysing an aqueous solution of a zirconium salt, drying an obtained suspension of the hydrous zirconia, and calcining an obtained hydrous zirconia powder, characterised in that the aqueous solution of the zirconium salt is hydrolysed until the rate of hydrous zirconia sol formation reaches 90% or more, preferably 95% or more, the aqueous solution is heated to drive off water so that the volume of the reaction solution is lowered to 1/2 to 1/20 of the original volume and the concentrated solution is then spray dried so as to produce a hydrous zirconia powder having a crystallite size of 5 nm or less, of which the mean primary particle size is in the range 50 to 150 nm, calcining the said hydrous zirconia powder at a temperature in the range 600 to 1300°C and then grinding the powder, whereby the zirconium oxide powder is characterised in that the BET specific surface area thereof is in the range 1 to 10 m$^2$/g, the mean particle size thereof is in the range 0.3 to 1 $\mu$m (micrometres), the powder contains no more than 5 vol% of particles having a particle size of 0.1 $\mu$m (micrometres) or less, and contains no more than 5 vol% of particles having a particle size of more than 10 $\mu$m (micrometres).

EP 0 517 437 B1

2. A method of making a zirconium oxide powder as claimed in claim 1, characterised in that the aerated bulk density of the hydrous zirconia powder is in the range 1.0 to 2.0 g/cm$^2$.

3. A method of making a zirconium oxide powder as claimed in claim 1, characterised in that the hydrous zirconia is added to the aqueous solution of the zirconium salt in an amount of 0.05% or more in terms of zirconium oxide with respect to the zirconium salt, and the hydrolysing is performed with a negative ion concentration of the mixture being in the range 0.5 gram.ion/litre to 1 gram.ion/litre.

4. A method as claimed in claim 1 or claim 3 characterised in that the hydrolysis is carried out at a temperature in the range 60 to 70°C.

5. A method of making a zirconium oxide powder as claimed in claim 1, 3 or 4, characterised in that the aqueous solution of the zirconium salt is boiled under reflux, condensed and hydrolysed under atmospheric pressure.

6. A method of making a zirconium oxide powder as claimed in any one of claims 1 to 5, characterised in that in the calcining thereof, the temperature of the hydrous zirconia powder containing added stabilizer is elevated at a rate of 1.0°C per one minute or less from a first lower temperature, which may be the same as the drying temperature of the hydrous zirconia suspension, to a second higher temperature at which a miscibility reaction is initiated.

## Patentansprüche

1. Verfahren zur Herstellung von Zirkoniumoxidpulver, das die Bildung von wasserhaltigem Zirkoniumdioxid durch Hydrolyse einer wäßrigen Lösung eines Zirkoniumsalzes, Trocknen einer erhaltenen Suspension des wasserhaltigen Zirkoniumdioxids und Calcinieren eines erhaltenen wasserhaltigen Zirkoniumdioxidpulvers umfaßt, dadurch gekennzeichnet, daß die wäßrige Lösung des Zirkoniumsalzes hydrolysiert wird, bis das Maß der Entstehung von wasserhaltigem Zirkoniumdioxid-Sol 90 % oder mehr, vorzugsweise 95 % oder mehr, erreicht, die wäßrige Lösung erhitzt wird, um Wasser zu entfernen, so daß das Volumen der Reaktionslösung auf 1/2 bis 1/20 des ursprünglichen Volumens reduziert wird und die konzentrierte Lösung anschließend sprühgetrocknet wird, um wasserhaltiges Zirkoniumdioxidpulver herzustellen, das eine Kristallgröße von 5 nm oder weniger aufweist, und dessen mittlere primäre Teilchengröße im Bereich von 50 bis 150 nm liegt, das wasserhaltige Zirkoniumdioxidpulver in einem Temperaturbereich von 600 bis 1300°C calciniert und anschließend das Pulver gemahlen wird, wobei das Zirkoniumoxidpulver dadurch gekennzeichnet ist, daß seine BET-spezifische Oberfläche im Bereich von 1 bis 10 m$^2$/g und seine mittlere Teilchengröße im Bereich von 0,3 bis 1 µm (Mikrometer) liegt, das Pulver nicht mehr als 5 Vol.-% Teilchen enthält, die eine Teilchengröße von 0,1 µm (Mikrometer) oder weniger aufweisen, und nicht mehr als 5 Vol.-% Teilchen enthält, die eine Teilchengröße von größer als 10 µm (Mikrometer) aufweisen.

2. Verfahren zur Herstellung von Zirkoniumoxidpulver nach Anspruch 1, dadurch gekennzeichnet, daß die lufthaltige Schüttdichte des wasserhaltigen Zirkoniumdioxidpulvers im Bereich von 1,0 bis 2,0 g/cm$^2$ liegt.

3. Verfahren zur Herstellung von Zirkoniumoxidpulver nach Anspruch 1, dadurch gekennzeichnet, daß wasserhaltiges Zirkoniumdioxid in einer Menge von 0,05 % oder mehr, ausgedrückt als Zirkoniumoxid im Hinblick auf das Zirkoniumsalz, zu der wäßrigen Lösung des Zirkoniumsalzes gegeben wird und die Hydrolyse bei einer Anionenkonzentration des Gemisches im Bereich von 0,5 bis 1 g • Ion/Liter durchgeführt wird.

4. Verfahren nach Anspruch 1 oder 3, dadurch gekennzeichnet, daß die Hydrolyse in einem Temperaturbereich von 60 bis 70°C durchgeführt wird.

5. Verfahren zur Herstellung von Zirkoniumoxidpulver nach Anspruch 1, 3 oder 4, dadurch gekennzeichnet, daß die wäßrige Lösung des Zirkoniumsalzes unter Rückfluß gekocht, bei Raumdruck kondensiert und hydrolysiert wird.

6. Verfahren zur Herstellung von Zirkoniumoxidpulver nach einem der Ansprüche 1 bis 5, dadurch gekennzeichnet, daß beim Calcinieren die Temperatur des wasserhaltigen Zirkoniumdioxidpulvers, das zugesetzten Stabilisator enthält, ausgehend von einer ersten niedrigeren Temperatur, die die gleiche wie die Trocknungstemperatur der wasserhaltigen Zirkoniumdioxidsuspension sein kann, mit einer Geschwindigkeit von 1,0°C pro Minute oder weniger bis zu einer zweiten höheren Temperatur, bei der eine Mischungsreaktion einsetzt, erhöht wird.

## Revendications

1. Procédé pour fabriquer une poudre d'oxyde de zirconium qui comprend la formation d'une zircone hydratée en

13

hydrolysant une solution aqueuse d'un sel de zirconium, le séchage d'une suspension de la zircone hydratée obtenue, et la calcination d'une poudre de zircone hydratée obtenue, caractérisé en ce que la solution aqueuse du sel de zirconium est hydrolysée jusqu'à ce que le taux de formation du sol de zircone hydratée atteigne 90 % ou plus, de préférence 95 % ou plus, la solution aqueuse est chauffée pour chasser l'eau de manière à ce que le volume de la solution réactionnelle s'abaisse jusqu'à 1/2 à 1/20 du volume original et la solution concentrée est ensuite séchée par pulvérisation de manière à produire une poudre de zircone hydratée ayant une taille de cristallite de 5 nm ou moins, dont la dimension des particules primaires moyenne se situe dans la gamme de 50 à 150 nm, en calcinant ladite poudre de zircone hydratée à une température se situant dans la gamme de 600 à 1300°C et ensuite en broyant la poudre, d'où il résulte que la poudre d'oxyde de zirconium est caractérisée en ce que la surface spécifique BET de celle-ci se situe dans la gamme de 1 à 10 $m^2$/g, la dimension particulaire moyenne de celle-ci se situe dans la gamme de 0,3 à 1 $\mu$m (micromètres), la poudre ne contient pas plus que 5 % en volume de particules ayant une dimension particulaire de 0,1 $\mu$m (micromètres) ou moins, et ne contient pas plus que 5 % en volume de particules ayant une dimension particulaire de plus que 10 $\mu$m (micromètres).

2.  Procédé pour fabriquer une poudre d'oxyde de zirconium tel que revendiqué dans la revendication 1, caractérisé en ce que la masse volumique non-tassée de la poudre de zircone hydratée se situe dans la gamme de 1,0 à 2,0 g/$cm^2$.

3.  Procédé pour fabriquer une poudre d'oxyde de zirconium tel que revendiqué dans la revendication 1, caractérisé en ce que la zircone hydratée est ajoutée à la solution aqueuse du sel de zirconium dans une quantité de 0,05 % ou plus exprimée par rapport à l'oxyde de zirconium, par rapport au sel de zirconium, et l'hydrolyse est effectuée avec une concentration en ions négatifs du mélange se situant dans la gamme de 0,5 gram.ion/litre à 1 gram.ion/litre.

4.  Procédé tel que revendiqué dans la revendication 1 ou la revendication 3, caractérisé en ce que l'hydrolyse est effectuée à une température se situant dans la gamme de 60 à 70°C.

5.  Procédé pour fabriquer une poudre d'oxyde de zirconium tel que revendiqué dans la revendication 1, 3, ou 4, caractérisé en ce que la solution aqueuse de sel de zirconium est bouillie à reflux, condensée et hydrolysée sous pression atmosphérique.

6.  Procédé pour fabriquer une poudre d'oxyde de zirconium tel que revendiqué dans l'une quelconque des revendications 1 à 5, caractérisé en ce que lors de la calcination de celle-ci, la température de la poudre de zircone hydratée contenant le stabilisant ajouté est augmentée à une vitesse de 1,0°C par minute ou moins à partir d'une première température plus basse, qui peut être la même que la température de séchage de la suspension de zircone hydratée, jusqu'à une seconde température plus élevée à laquelle une réaction de miscibilité est initiée.